# EUROPEAN PATENT APPLICATION

(11) **EP 3 106 973 A1**
(43) Date of publication of application: **21.12.2016**
(21) Application number: 15172353.3
(22) Date of filing: 16.06.2015
(51) Int. Cl.: G06F 3/0484, G06F 9/44, G06F 9/48, H04M 1/725, G06F 3/0481

(54) **CONTEXT-DRIVEN ADAPTIVE APPLICATION LAUNCHER GRID USER INTERFACE BASED ON RANDOM INDEX PREDICTOR FOR MOBILE DEVICES**

(71) Applicant: Huawei Technologies Co., Ltd., Longgang District Shenzhen, Guangdong 518129 (CN)
(72) Inventor: SALMINEN, Karoliina, 16440 Kista (SE); TERHO, Mikko, 16440 Kista (SE)
(74) Representative: Pfenning, Meinig & Partner mbB

(57) **Abstract**

An apparatus for arranging and presenting application icons in an application grid on a user interface of a mobile communication device includes a processor that is configured to detect a user action and at least one context parameter associated with the mobile communication device, determine one or more applications relevant to a combination of the detected user action and the at least one context parameter and arrange the application grid to present application icons corresponding to the determined one or more applications relevant to the detected user action.

## Description

### TECHNICAL FIELD

The aspects of the disclosed embodiments relate generally to mobile communication devices and in particular to a context aware user interface for a mobile communication device.

### BACKGROUND

A mobile communication or computing device, such as for example, a smart phone, tablet or phablet, can include any number of applications stored thereon. The applications are typically represented by application icons or shortcuts that are presented to the user via an application menu or application grid. The term "application" as it is used herein, generally refers to any program that can be stored and run on a mobile communication device. As the number of applications on a device increase, so do the number of application icons.

The application grid for a mobile communication device is generally configured in a fixed or static arrangement. The order and arrangement of the icons of the user interface of the mobile communication device will typically not change unless reconfigured by the user.

Mobile communication devices can be configured to provide the application grid or menu on a single page or screen of the user interface, generally referred to as the application screen. In some cases, the application grid can be spread or distributed across a number of screens of the device. With the possibility of so many applications that can be included in the application grid of a mobile communication device, finding a specific or relevant application can be a problem.

One approach to easing the difficulty in locating a specific application from the application grid is to provide a favorites bar or menu on a screen of the mobile communication device. The favorites bar or menu will typically include one or more icons for applications that are more commonly accessed by the user. There is usually a limit to the number of icons in the favorites bar.

The favorites bar will generally be provided at a suitable location on a screen of the mobile communication. For example, some mobile communication devices will provide a favorites bar along the bottom portion of the home or main screen of the device. While the favorites bar or other such menu can be configured by the user, the presentation of icons in the favorites bar is generally static and not context dependent. It would be advantageous to provide an application menu or grid that is context dependent. It would also be advantageous to provide an application grid in which applications relevant to a particular action or situation are readily identified and located.

Thus, there is a need for improved apparatus and methods for application grids arranged based on context awareness in mobile communication devices.

### SUMMARY

It is an object of the present invention to provide an apparatus and method to predict relevant applications for a currently prevailing activity and dynamically arrange the application icons of an application grid of a mobile communication device. This object is solved by the subject matter of the independent claims. Further advantageous modifications can be found in the dependent claims.

According to a first aspect of the present invention, the above and further objects and advantages are obtained by an apparatus (e.g. such as a mobile communication device) for arranging and presenting application icons in an application grid on a user interface of the mobile communication device, where the apparatus includes a processor, the processor is configured to detect a user action and at least one context parameter associated with the apparatus, determine one or more applications relevant to a combination of the detected user action and the at least one context parameter and arrange the application grid to present application icons corresponding to the determined one or more applications relevant to the detected user action. The monitoring of the actions of the user with the apparatus and the environment in which the apparatus is operating, supports context awareness in the apparatus and enables context relevant application icons to be presented in a readily identifiable manner. As already mentioned, the apparatus can be a mobile communication device or in short a mobile device.

In a first possible implementation form of the apparatus according to the first aspect the processor is configured to present the application icons in a predetermined area on the user interface. This enables context relevant application icons to be easy to find and identifiable by the user.

In a second possible implementation form of the apparatus according to the first aspect as such or the first possible implementation form of the apparatus according to the first aspect, the processor is configured to highlight the application icons corresponding to the determined one or more applications relevant to the detected user action relative to other application icons in the application grid. The aspects of the disclosed embodiments are configured to dynamically arrange the relevant application icons on the application grid in a manner that makes the relevant application icons readily identifiable.

In a third possible implementation form of the apparatus according to the first aspect as such or to any of the preceding possible implementations forms of the apparatus according to the first aspect, the detected user action comprises one or more of walking, running or standing. Whether the user is walking, running or standing can be used to identify applications that are relevant to such activities.

In a fourth possible implementation form of the apparatus according to the first aspect as such or to any of the preceding possible implementations forms of the apparatus according to the first aspect, the context parameter comprises one or more of an ambient light state, an ambient temperature or a physical handling of the mobile communication device. Environmental parameters can be used to identify relevant applications.

In a fifth possible implementation form of the apparatus according to the first aspect as such or to any of the preceding possible implementations forms of the apparatus according to the first aspect, the processor is configured to detect at least one or more of a time of the user action and a location of the user action and use the one or more of the time of the user action and the location of the user action to determine the one or more applications relevant to the detected user action. The aspects of the disclosed embodiments use time and location to determine a context and predict context relevant applications.

In a sixth possible implementation form of the apparatus according to the first aspect as such or to any of the preceding possible implementations forms of the apparatus according to the first aspect, the processor is configured to re-arrange the application grid of the user interface to present the application icons corresponding to the determined one or more applications relevant to the detected user action in a pre-determined region of the user interface. This enables applications that are context relevant to be easily and readily identified.

In a seventh possible implementation form of the apparatus according to the first aspect as such or to any of the preceding possible implementations forms of the apparatus according to the first aspect, the processor is configured to re-arrange the application grid of the user interface to present the application icons corresponding to the determined one or more applications relevant to the detected user action in a pre-determined order on the user interface. This enables applications that are context relevant to be easily and readily identified.

In an eighth possible implementation form of the apparatus according to first aspect as such or to any of the preceding possible implementations forms of the apparatus according to the first aspect, the processor is configured to use a random index predictor to determine the one or more applications relevant to the detected user action. The use of a random index predictor allows real world event data and actions to be turned into a set of words from which vectors are formed to provide a sparse representation of the event data and associated applications. Random index processing enables a reliable and efficient determination of similarities between the current set of words and previously generated sets of words.

In a ninth possible implementation form of the apparatus according to the first aspect as such or to any of the preceding possible implementations forms of the apparatus according to the first aspect, the processor is configured to identify a current arrangement of application icons in the application grid of the user interface and reconfigure the current arrangement of application icons in the application grid to present application icons corresponding to the one or more applications relevant to the detected user action and at least one environmental parameter. This enables a context relevant rearrangement of the application grid without any need for user intervention.

In a tenth possible implementation form of the first aspect as such or to any of the preceding possible implementation form of the apparatus according to the first aspect as such, the processor is configured to re-configure a pre-determined area of the user interface to include application icons corresponding to the determined one or more relevant applications. Having a pre-determined area where context relevant applications icons are presented eases the navigation and searching for an application icon.

In an eleventh possible implementation form of the first aspect as such or to any of the preceding possible implementations forms of the apparatus according to the first aspect, the processor is configured to arrange the application icons corresponding to the determined one or more relevant applications in a center region of the user interface. It can be advantageous to locate the context-relevant dynamically arrange application icons in a prominent region such as the center of the application grid.

In a twelfth possible implementation form of the apparatus according to the first aspect as such or to any of the preceding possible implementations forms of the apparatus according to the first aspect, the mobile communication device includes a switch for switching the user interface between a conventional application grid mode and a self-arranging application grid mode, wherein the self-arranging application grid mode is configured to automatically arrange the application grid of the user interface to present the application icons corresponding to the determined one or more relevant applications on the user interface. This provides the user with the flexibility to select when the application grid should be dynamically arranged based on relevant context information. The switch may be software implemented or hardware implemented (e.g. by means of a button at the mobile communication device).

In a thirteenth possible implementation form of the apparatus according to the first aspect as such or to any of the preceding possible implementations forms of the apparatus according to the first aspect the processor is configured to create a user profile comprising one or more detected user actions and one or more corresponding application grid arrangements, compare the detected user action and the at least one context parameter to the user profile and re-arrange the application grid to present an application grid arrangement from the user profile corresponding to the detected user action. The use of a user profile enables more relevant applications to be presented in the application grid.

In a fourteenth possible implementation form of the mobile communication device according to the thirteenth possible implementation form, the processor is configured to detect a selection of an application and update the user profile to associate the detected selection of the application with the detected user action and the at least one environmental parameter. This allows the mobile communication device to learn from prior actions and make more accurate future predictions.

According to a second aspect of the present invention the above and further objects and advantages are obtained by a method for predicting applications to be presented in an application grid of an apparatus (e.g. such as a mobile communication device). The method includes detecting a user action and at least one context parameter associated with the apparatus, determining one or more applications relevant to a combination of the detected user action and the at least one context parameter and arranging the application grid to present application icons corresponding to the determined one or more applications relevant to the detected user action and at least one context parameter. The monitoring of the actions of the user with the apparatus and the environment in which the device is operating, supports context awareness in the apparatus and enables context relevant application icons to be presented in a readily identifiable manner.

In a first possible implementation form of the second aspect, the method includes translating the detected user action and at least one of a time of the user action and a location of the user action into a set of words, calculating a semantic similarity, such as for example a cosine similarity, between the set of words and a previously generated sets of words, predicting at least one relevant application based on the calculated semantic similarity. The aspects of the disclosed embodiments enable the sets of words to be processed in, for example, a random index machine learning algorithm. The random index algorithm provides a reliable text classification system and enables identifying similarities between a current set of words and previously generated sets of words, using for example, the cosine similarity.

Random index algorithms have been used for natural language processing and text classification. The paper by Magnus Sahlgren entitled "The Word-Space Model: Using distributional analysis to represent syntagmatic and paradigmatic relation between words in high-dimensional vector spaces" describes the use of Random Indexing in text classification. However, Sahlgren merely describes text classification. There is no teaching related to identifying and arranging relevant application on an application grid of a mobile device. Using of the Random Indexing Algorithm enables to predict a next application based on text analysis without the need for a programmer to explicitly program the activity model.

In a second possible implementation form of the second aspect, the method includes detecting a selection of a predicted application, creating an action corresponding to the selected predicted application, associating the created action with the set of words, and storing the created action and the set of words in the previously generated sets of words. Real world event data and actions are turned into a set of words from which vectors are formed to provide a sparse representation of the event data and associated applications. Newly formed event vectors are compared to previously stored event vectors to determine similarities vectors. The similar vectors are used as the basis for the predicted applications.

According to a third aspect of the present invention the above and further objects and advantages are obtained by a computer program product including non-transitory computer program instructions that when executed by a processor cause the processor to perform the method according to the second aspect.

According to a fourth aspect of the present invention the above and further objects and advantages are obtained by a method for predicting a relevant application for use on an apparatus (e.g. such as a mobile communication device). The method includes detecting an event, reading sensor data that is detected contemporaneously with the event and creating a set of words corresponding to the event and the sensor data. The set of words is translated into vectors which are joined together by a union between the vectors. A random index matrix that includes rows for each word is updated with the vector by vector summation. The vector that is formed is compared to other vectors in the random index matrix. Similarities are determined using a cosine similarity measure. A good prediction will have a high cosine similarity value. The words in a row corresponding to the high cosine similarity measure are sorted in a similarity order and applications associated with the words are presented on the user interface. When one of the presented applications is selected, the word is translated into an actual action in the operating system of the mobile device. The action taken is stored in conjunction with the set of words in the random index matrix.

The aspects of the disclosed embodiments enable context information in the form of raw sensor data to be translated into sets of words that can then be processed to identify one or more applications that are currently relevant to the data. Random index processing enables determination of similarities between the current set of words and previously generated sets of words. The similarities can be used as the basis for the predicted applications. When an application is selected, this information is used to refine the set of possible predicted applications by associating the selected application with the current set of words and storing this new association in the previously generated sets of words. This new association can then be used for comparison purposes when a new set of words is formed.

The foregoing and other objects are achieved by the features of the independent claims. Further implementation forms are apparent from the dependent claims, the description and the figures.

These and other aspects, implementation forms, and advantages of the exemplary embodiments will become apparent from the embodiments described below considered in conjunction with the accompanying drawings. It is to be understood, however, that the description and drawings are designed solely for purposes of illustration and not as a definition of the limits of the disclosed invention, for which reference should be made to the appended claims. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

### BRIEF DESCRIPTION OF THE DRAWINGS

In the following detailed portion of the present disclosure, the invention will be explained in more detail with reference to the example embodiments shown in the drawings, in which:
Figure 1 illustrates a block diagram of a mobile computing device appropriate for practicing embodiments of the present invention;
Figure 2 illustrates block diagram of an operating system for a mobile computing device incorporating aspects of the disclosed embodiments;
Figure 3 illustrates a block diagram of an exemplary user interface for a mobile computing device incorporating aspects of the disclosed embodiments;
Figure 4 illustrates a block diagram of an exemplary user interface for a mobile computing device incorporating aspects of the disclosed embodiments;
Figure 5 illustrates a block diagram of an exemplary architecture for a random index system incorporating aspects of the disclosed embodiments;
Figure 6 is a flow chart illustrating an exemplary process incorporating aspects of the disclosed embodiments.

### DETAILED DESCRIPTION OF THE DISCLOSED EMBODIMENTS

The methods and apparatus disclosed herein provide a self-adapting context aware application grid system for mobile computing and communication devices (generally referred to herein as "mobile devices") that can detect the occurrence of an action or event, detect the context surrounding the event and present application icons on a user interface of the mobile device that are relevant to the detected avent and context information. The application grid of the mobile device can be arranged, or re-arranged, to present the context relevant application icons in a readily identifiable manner.

A random index predictor can be used to predict the icon order or arrangement. The mobile device captures data related to the detected events, including the environment, and transforms this data into machine readable information. By comparing the current data with previously generated data, predictions of relevant applications can be provided. The actions taken by the user in conjunction with a current set of context-relevant icons can be stored with previously generated data to refine future predictions of relevant applications.

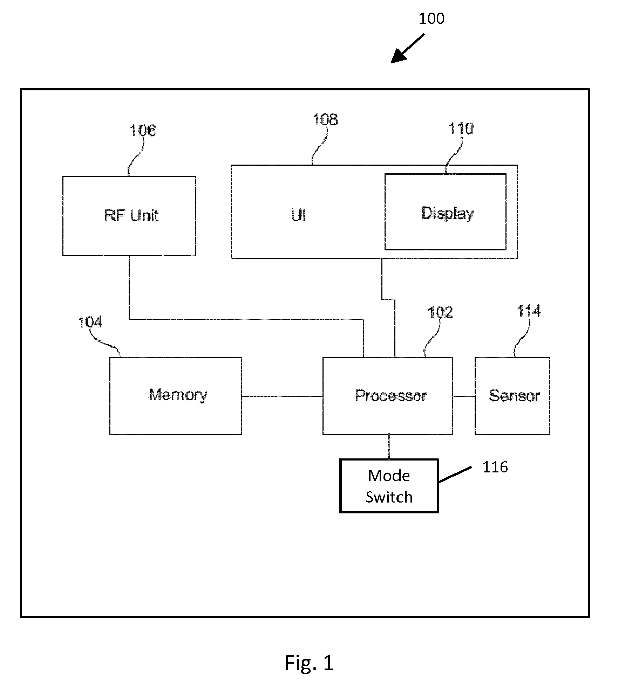

Figure 1 illustrates a block diagram of an apparatus 100 appropriate for implementing aspects of the disclosed embodiments. The illustrated apparatus 100 according to an embodiment of the present invention includes a processor 102 coupled to a computer memory 104, a radio frequency (RF) unit 106, a user interface (UI) 108, a display 110, and sensors 114. The apparatus 100 is appropriate for use as a mobile computing or communication device, which may be or include any of various types of wireless communications user equipment including cell phones, smart phones and tablet devices. For the purposes of the description herein, the apparatus 100 will generally be referred to as a "mobile device".

The processor 102 may be a single processing device or may comprise a plurality of processing devices including special purpose devices, such as for example, digital signal processing (DSP) devices, microprocessors, specialized processing devices or general purpose computer processors. The processor 102 is configured to perform the context aware prediction process described herein.

The processor 102 is coupled to a memory 104 which may be a combination of various types of volatile and non-volatile computer memory such as for example read only memory (ROM), random access memory (RAM), magnetic or optical disk, or other types of computer memory. The memory 104 stores computer program instructions that may be accessed and executed by the processor 102 to cause the processor to perform a variety of desirable computer implemented processes or methods.

The program instructions stored in memory 104 are organized as sets or groups of program instructions referred to in the industry with various terms such as programs, software components, software modules, units, etc., where each program may be of a recognized type such as an operating system, an application, a device driver, or other conventionally recognized type of software component. Also included in the memory 104 are program data and data files which are stored and processed by the computer program instructions.

The RF Unit 106 is coupled to the processor 102 and configured to transmit and receive RF signals based on digital data exchanged with the processor 102. The RF Unit 106 is configured to transmit and receive radio signals that may conform to one or more of the wireless communication standards in use today, such as for example Long Term Evolution (LTE) and LTE-Advanced (LTE-A) developed by the third generation partnership project (3GPP), Wi-fi based on the institute of electrical and electronics engineers (IEEE) 802.11 standards, as well as many others. In certain embodiments, the RF Unit 106 includes receivers capable of receiving and interpreting messages sent from satellites in the global positioning system (GPS) and work together with information received from other transmitters to obtain positioning information pertaining to the location of the device 100.

In one embodiment, the mobile device 100 includes one or more sensors 114 coupled to the processor 102. The sensors are configured to capture event data that may be used by the processor 102 to enhance activity or context awareness. The aspects of the disclosed embodiments capture event data associated with the mobile device 100, predict one or more relevant applications and arrange the application grid (as shown on the display 110) to present the relevant application icons, generally in a conspicuous or readily identifiable manner.

The event data referred to herein generally refers to actions or data associated with, or occurring on, the mobile device 100, as well as data related to the environment in which the mobile device 100 is operating. Generally, the event data will comprise a user action and can include or be associated with at least one or more of a time and location of the user action. The event data can include, but is not limited to, a state of the mobile device 100, the time, the location of the mobile communication device, a movement status (stationary, walking, running, vertical, horizontal), whether the mobile communication device 100 is moving in a car or other vehicle, a temperature of the environment in which the mobile communication device 100 is located, a position of the mobile device 100, an orientation of the mobile device 100 (vertical, horizontal), lighting conditions and a proximity of the mobile device 100 to other objects or locations. Further examples of the type of data and parameters are illustrated in Table 1, below.

In one embodiment, the detected user action is used in conjunction with one or more of a time of the user action, and a location of the mobile device 100 when the user action is detected, to form the context information. In alternate embodiments, the event data and actions can comprise any one of a number of multiple parameters, including for example, the state of the mobile device, time, location, movement and environmental conditions. It will be understood that the context information can comprise any one of a number of parameters that can be used to identify a current event and user action and predict one or more next, or relevant applications to the user, that are then presented on the application grid of the mobile device.

The user action can comprise any one of a number of activities, such as a physical activity or the user interaction with the mobile device 100. For example, the user action may be one of walking or running. Alternatively, the user action could be the use of an application on or with the mobile device 100, such as reading an article on a new website or looking at a schedule.

The sensors 114 may include for example, one or more of an accelerometer, a clock, light meter, positioning or location sensor, thermometer, as well as other sensors. In alternate embodiments, the sensors 114 can include any suitable sensors that may be used to detect user actions, a state of the mobile device, the relative environment in which the mobile device 100 is situated, as well as events and activities occurring with or around the mobile device 100.

The UI 108 may include one or more user interface elements such as a touch screen, keypad, buttons, voice command processor, as well as other elements adapted for exchanging information with a user. The UI 108 may also include a display unit 110 configured to display a variety of information appropriate for a mobile computing device or mobile user equipment and may be implemented using any appropriate display type, which can include for example organic light emitting diodes (OLED), liquid crystal display (LCD), as well as less complex elements such as LEDs or indicator lamps. In certain embodiments the display unit 110 incorporates a touch or near touch screen for receiving information from the user of the mobile device 100. As is illustrated in Figure 1, in one embodiment, the mobile device 100 includes a mode switch 116. The mode switch 116 enables the mobile device 110 to implement and support at least two modes of operation. A first mode is configured to present the conventional application menu or grid, also referred to as a static favorites mode. The second mode provides the self-arranging application grid with a context-dependent application icon arrangement, also referred to as dynamic context dependent favorites. The mode switch 116 comprises any suitable switching device that allows the mobile device 100 to switch between the two modes. The mode switch 116 can comprise a hard switch or a soft switch. In one embodiment, the mode switch 116 is a soft switch or icon presented on a menu or setting application (displayed on the display 110) of the mobile device 100. In another embodiment, the mode switch 116 is implemented by a hardware button of the mobile device 100.

The mobile device 100 described above and illustrated in Figure 1 is appropriate for implementing any of the apparatus and methods disclosed herein. Especially may the processor 102 be configured to perform the methods described in the foregoing and the following.

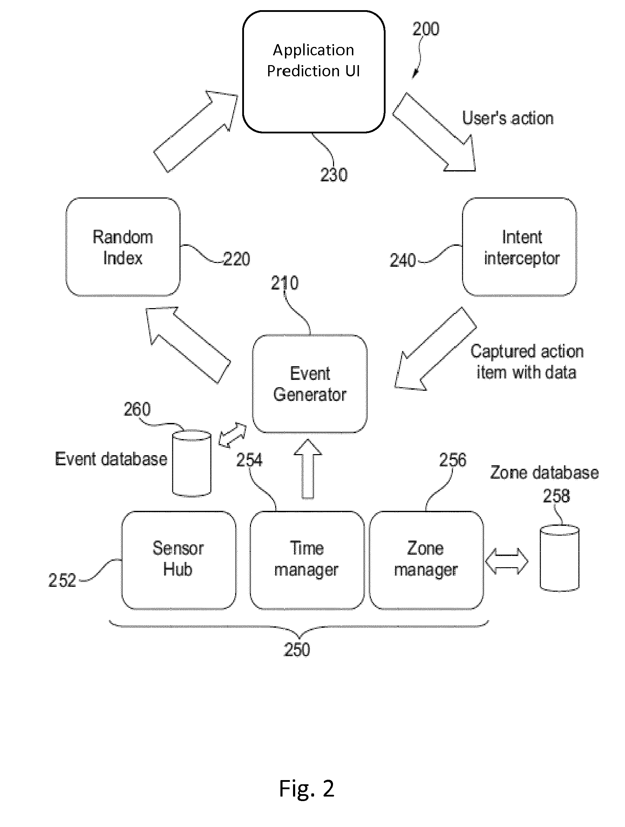

Figure 2 illustrates a block diagram representation of a context aware application prediction system 200 incorporating aspects of the present invention. As shown in Figure 2, the context aware application prediction system 200 includes an event generator 210, a random index system 220, an application prediction user interface (UI) 230 and an intent interceptor 240. In alternate embodiments, the context aware application prediction system 200 can include such other components and devices that are suitable to enable the mobile device 100 to detect at least event and context data and provide an arrangement of one or more relevant application icons on the user interface 108 of the mobile device 100.

The context aware application prediction system 200 is generally configured to be included with or part of the mobile device 100. For example, in one embodiment, the context aware application prediction system 200 is part of the operating system of the mobile device 100. Unlike other systems where personal data needs to be transferred from the device to a server or the cloud, the aspects of the disclosed embodiments do not require any such data transfer. Personal user content and user data security is maintained locally, providing a more robust secure system.

The aspects of the disclosed embodiments are configured to detect event data and actions. The event generator 210 is configured to receive the event data and actions, or context information and combine or form such data and information into words.

In one embodiment, the context information, or sensor data, is translated from one or more data sources 250. In the example of Figure 2, the data sources 250 that are used to provide or detect the user action and the context information include a sensor hub 252, a time manager 254 and a location or zone manager 256. The data sources 250 can comprise one or more of the sensors 114 illustrated in Figure 1. In alternate embodiments, the data sources 250 that are used to provide the context information can be any suitable sources or sensors that describe or provide event data that can be captured contemporaneously with a user action and a state of the mobile device 100. Although the description herein is generally described with respect to a user "action", it will be understood that such action can include or comprise more than one action.

In one embodiment, the sensor hub 252 is configured to detect a user action and generate data which can be used to identify the user action. For example, the sensor hub 252 can detect whether the user of the mobile device 100 is moving, such as by walking or running. Suitable positioning and location sensors can be used to detect motion, the type of motion as well as a location of the mobile device 100. For example, position and location sensors in the sensor hub 252 can be used to detect whether the mobile device 100 is moving, and if it is moving, whether it is moving towards or away from a particular location.

The sensor hub 252 can also be configured to determine or detect a state of the mobile device 100 when the user action occurs. For example, the sensor hub 252 can be configured to detect whether an application is active on the mobile device 100, as well as the particular type of activity taking place with the application. In one embodiment, the sensor hub 252 might detect that an Internet browser of the mobile device 100 is open or active. The sensor hub 252 can also be configured to detect a particular web site or web page that is being viewed within the browser. The aspects of the disclosed embodiments are configured to not only identify open applications at the time of a user action, but also the open documents or data items inside the open applications. This can be advantageously used to provide a more refined and specific prediction of applications relevant to the particular user action and context.

In one embodiment, the data sources 250 can also include a time manager 254. The time manager 254 generally comprises a suitable time keeping device, such as a clock, which can be used to detect one or more of a date and time of a user action or other event. The time data can be stored in conjunction with the detected event data. The data sources can also include a zone manager 256. The zone manager 256 is generally configured to detect a location of the mobile device 100. In one embodiment, the zone manager 256 can include a GPS device as well as a mapping system that can provide detailed location data. In alternate embodiment, the zone manager 256 can include any suitable location services device or application. The zone data can be stored in conjunction with the detected event data.

The event generator 210 is configured to translate one or more of the sensor data from the sensor hub 252, the time data from the time manager 254 and the location data from the zone manger 256, into a set of words, also referred to herein as a "bag of words" or the "context information set of words." The "words" representing the sensor data form the parameters that will be used to predict one or more relevant applications by comparing the current set of words to a previously generated set of words.

The previously generated set of words will include associations with one or more applications. By comparing the current set of words with the previously generated set of words and determining similarities, applications relevant to the current set of words can be identified, based on the associations. The identified applications can then be presented on the application prediction user interface 230, or application grid, of the mobile device 100.

In one embodiment, the random index system 220 can be supplied with pre-learned experiences to form the previously generated sets of words. A pre-learned experience can include an application that is associated with particular event and context data. This can enable a "warm-start" rather than relying on new experiences or associations. The random index system 220 and the pre-learned experiences can be saved as a file that can be downloaded and installed onto multiple mobile devices 100.

In one embodiment, when a user action with the mobile device 100 is detected, the sensor hub 252 reads the sensory information from one or more of the sensors 114 of the mobile device 100. This can include detecting the user action such as movement, the position or location of the mobile device 100, and applications that are open on the mobile device 100. The event generator 210 takes the data from the data sources 250 and translates the data to a concept that can be described by one or more words. The words are combined or form the set of words.

For example, if the event and context data is indicative of walking, the event generator 210 will translate the event and contact data into the machine language equivalent, or other suitable representation, of the word "WALKING." The time manager 254 can provide time and calendar data indicating that the detected action of WALKING occurred on a Tuesday at noon. In one embodiment, a specific date can also be provided. Also, the zone manager 256 can provide location data indicating that the detected action of WALKING occurred near the train station. When the relevant actions and data are translated into words, this can result in this example, with the set of words "WALKING, TUESDAY, NOON, TRAIN STATION." This set of words represents the current action and context information associated with the detected event.

The set of words is then transmitted to the random index system 220. The random index system 220 is configured to use the current set of words to predict one or more applications that are relevant to this set of words, also referred to as the current set of words. By identifying the user actions, the random index system 220 can predict applications of the mobile device 100 that might be associated with, or relevant to these actions.

In one embodiment, the random index system 220 is configured to compare the current set of words to one or more previously generated sets of words to find the same or similar sets of words. The previously generated sets of words generally describe or are associated with events or actions that occurred in the past and have typically been associated with relevant applications. In this manner, similar actions, based on the word sets, can be identified.

For example, if the current set of words corresponds to WALKING, TUESDAY, NOON, TRAIN STATION, and there is previously generated set of words similar to this current set of words, the applications associated with the previously generated set of words can be used in the predictions. In one embodiment, the previously generated sets of words and associated applications can be stored in a memory, such as the event database 260.

The random index system 220 is configured to calculate a similarity, such as for example a semantic similarity, between the current set of words and the previously generated sets of words. In one embodiment, in order to calculate a similarity between the different sets of words, the sets of words are translated into vectors, which are then joined together by a union between the vectors. A random index, such as a random index matrix for example, is used to store the vectors, and the rows of the random index, where each row represents a word, is updated with a vector by vector summation.

The vector formed corresponding to the current set of words is used for predicting a relevant application by identifying similar vectors in the random index. This includes identifying the closeness or similarities between the vectors that are used to represent the current set of words and the vectors that are used to represent the previously generated sets of words. In one embodiment, the closeness or similarity can be calculated using, for example, one or more of a cosine distance or dot product calculation between the different vectors. When the similarity is determined using a cosine similarity measure between vectors, the vectors from the random index that can be used for good predictions will have a high cosine similarity measure.

The aspects of the disclosed embodiments translate the raw sensor data from the data sources 250 into words. In one embodiment, the words in the sets of words described herein are generally in the form of a machine-understandable language. One example of such a machine-understandable language is the W3C URI format. Table 1 below illustrates a set of words as W3C notation. Table 1 also illustrates different examples of the types of sensor data, or parameters that are used to form the set of words.

| Table 1 |
|---|
| flat://on |
| utc://2013-08-20T12:23:44 |
| gps://60.1954075/24.9484521 |
| proximity://NEAR |
| timezone://EET |
| lighting://LIGHT |
| timeOtDay://AFTERNOON |
| orientation://FACE UP |
| motion://STILL |
| wifiNetwork://ssid/AndroidAPks |
| wifiNetwork://ssid/HWFBCPE |
| wifiNetwork://ssid/NTPC02 |
| address://Plkneentie 14, 00510 Helsinki |
| appStarted://com.android.phone/null |
| wifiNetwork://ssid/AndroidAP |
| timestamp://2013-08-20T15:23:44 |
| wifiNetwork://ssid/E17-19 |
| dayOfWeek://TUESDAY |
| wifiNetwork://ssid/Vallila Interior Visitor |
| wifiNetwork://ssid/sipulinet |
| month://August |
| location://zone1 |
| wifiNetwork://ssid/jmkn4 |
| wifiNetwork://ssid/Mobile Pirates |
| wifi://connected/AndroidAPks |
| wifiNetwork://ssid/matetuuba |
| stability://UNSTABLE |
| appNavigated://com.android.phone/com.android.phone.InCallScreen |
| charger://connected |
| wifiNetwork://ssd/wlanaccessv2.0 |
| wifiNetwork://ssid/everest |
| network://Saunalahti |

The aspects of the disclosed embodiments code a transition matrix of the current set of words. This forms a sequential sparse transition matrix of groups of words. By comparing the current set of words to the previously generated sets of words, a prediction can be made as to the applications that may be relevant to the current set of words.

In one embodiment, each word that occurs in the set of words, such as that shown in Table 1 above, is converted by the random index prediction system 220 into an index vector. An index vector is a sparse vector that is randomly generated with multiple negative and positive small values. In the exemplary embodiment, the initial values are -1 and +1 (i.e. 10 pieces of -1 s and 10 pieces of +1 s distributed in random indices of the 10000 storage location length vector). The aspects of the disclosed embodiments use 10 negative and 10 positive values in random indexes between 0 and 9999. The index vector that is generated is a randomly generated sparse hash for a word.

The random index system 220 is configured to be agnostic to what it describes. Thus, the format of the incoming words, or the current set of words, is not material. The W3C format described herein is useful because it enables the use of labels in the prediction phase. This allows for recognition of the prediction as a uniform resource locator ("URL") or some other "system word".

After each word in the current set of words is converted into an index vector, the words are joined together by a union between the index vectors. There are no duplicate words in the set of words because the set of words is a set of strings. The union of index vectors is a sparse vector, also referred to herein as the sparse representation of the event, which also has 10000 storage locations between 0 and 9999. The sparse vector is stored in the random index, where each row represents a word and the columns are the 10000 dimensions. This union of index vectors is also referred to as a "context vector" referring to The Word-Space Model" dissertation by Magnus Sahlgren.

The newly generated context vector that was constructed from the current event, as described by the set of words, is then added to every word's row in the Random Index. These context vectors will predict the word that is identified by the row. In other words, if the conditions that result in the context vector similar to that row do exist, the conclusion is that the word in that row is likely to be involved.

The words in the rows corresponding to the vectors with high cosine similarity measure are sorted in similarity order. Similar results will receive up to 1.0 and not similar results will receive a 0. Good predictions will be based on a high cosine similarity. If the vector is dissimilar (=inverse) to the vector in the Random Index, then the result will be -1. The results along with the words corresponding to the result are added into ordered set of pairs where the ordering is done with the result as a key so that the bigger value wins lower value. This is then returned and is the resulting set of words. In one embodiment, the sensor words (e.g. charger://connected motion://STILL and so on) are filtered out from the results and only actionable words such as URLs, contacts, or launching an application will be included.

The mobile device 100 will then present an application prediction, or application icon, for one or more of the identified similar vectors, in a human readable list or grid arrangement. This list can be presented on the application prediction user interface 230. The application prediction user interface 230 generally corresponds to the user interface 108 of the mobile device 100. In one embodiment, the application prediction user interface 230 may comprise a specific area or region of the user interface 108.

When an application prediction, such as an application icon, is selected, the selection is translated into an actual action in the operating system of the mobile device. This can include opening the associated application. The action taken can be recorded in association with the formed vector in the random index. During a next prediction process, this recorded vector and action, also referred to as the previously generated sets of word, can be used when determining vector similarity.

In one embodiment, a time window is used in the addition of the context vectors. In the exemplary embodiment, a time window of three is used. In alternate embodiments, any suitably sized time window can be used, other than including three. This time window includes the current word, the previous word and the next word. The context vector of the previous word and the context word of the next word are added to the context vector of the current word in the Random Index. This will join the subsequent events together. The time window can be enlarged to reach farther back in time or further forward in the future.

Table 2 below illustrates an example of context vectors in a Random Index incorporating aspects of the disclosed embodiments. It is noted that in the Random Index of Table 2, the example vectors are divided along multiple lines because they are long. Table 2 also provides examples of the different types of event data or parameters that can be used in the prediction system of the disclosed embodiments.

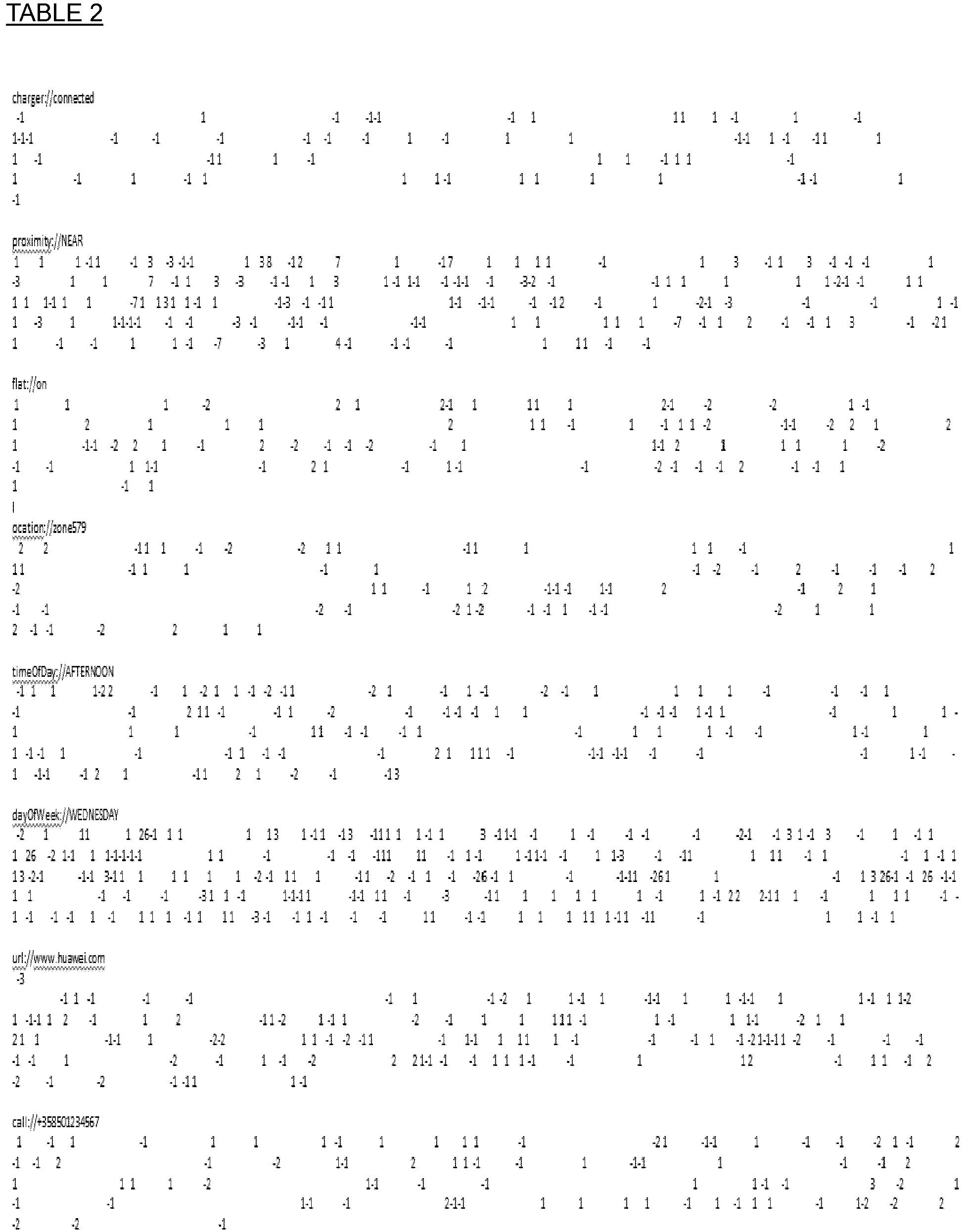

The aspects of the disclosed embodiments rely on past or previous actions and data to provide the predicted application(s). The transitions described herein are encoded in a one way, directional manner.

In one embodiment, a delay line can be used to encode the past in the context vectors. A delay line generally comprises a decay series of the previous event's context vectors. This is a very simple way to form the history with a flat Random Index so that the strongest relation is with the item that occurred more recently, and a less strong relation is an event that occurred further in the past or longer ago. The delay line is constructed by adding the previous context vector to the current context vector and dividing it by a decay factor. This reduces the strength of previous events, similar to pressing down the sustain pedal in a piano. While the previous events continue to "ring", new events appear stronger.

Table 3 below illustrates an exemplary delay line computation.

**TABLE3**

| |
|---|
| Event vector |
| 000000100010010000000011000000001010000000000011001001 |
| Previous event vector |
| 001000000000000000000000001000001010000000000000001000 |
| Previous event vector divided by decay-factor (e.g. 2.0) |
| 00 0.5 00000000000000000000000 0.5 00000 0.5 0 0.5 000000000000000 0. 5 000 |
| The event vector combined to decayed previous event vector |
| 001000100010010000000011001000001010000000000011001001 |
| U |
| 001000000000000000000000001000001010000000000000001000/2 |
| = |
| 001.50000.50000.5001.5000000001.51.5001.5000001.501.5000000000001100 |

In one embodiment, this random index is saved or backed-up on the memory 104 of the mobile device 100, such as a flash memory for example. In the case of a restart, the random index is loaded from the memory 104 and the system 200 is back online for accumulating more data and performing predictions. As noted above, personal user content and user data security is maintained locally.

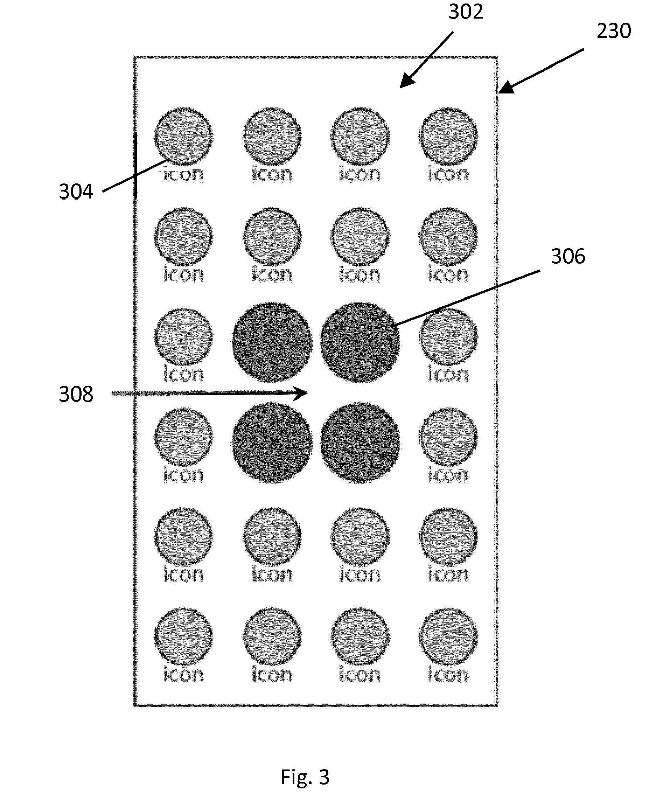

The random index system 220 is configured to provide application predictions that will be presented on the application prediction user interface 230. As noted above, the application predictions user interface 230 comprises the user interface 108, or a portion thereof, shown in Figure 1. Figure 3 is an exemplary illustration of a prediction user interface 230 as it might be presented on the display 110 of an exemplary mobile device 100. The application prediction user interface 230 in this example is in the form of an application grid, as might typically be encountered on a mobile device 100. As will be generally understood, there are many ways to present applications icons on the user interface 108 of a mobile device 100. The aspects of the disclosed embodiments are configured to present the relevant applications on the user interface 108 in a readily identifiable manner.

In this example, the application prediction user interface 230 includes one or more application icons, generally identified as application icons 302. The application icons 302 are distributed on the application prediction user interface 230 in any suitable manner. In this example, the distribution is in the form of a grid.

The application icons 302 in the example of Figure 3 include one or more non-predicted, or standard application icons 304, and one or more "predicted" or relevant application icons 306. The predicted application icons 306 are associated with applications that are predicted to be relevant to the current event and context data associated with the mobile device 100.

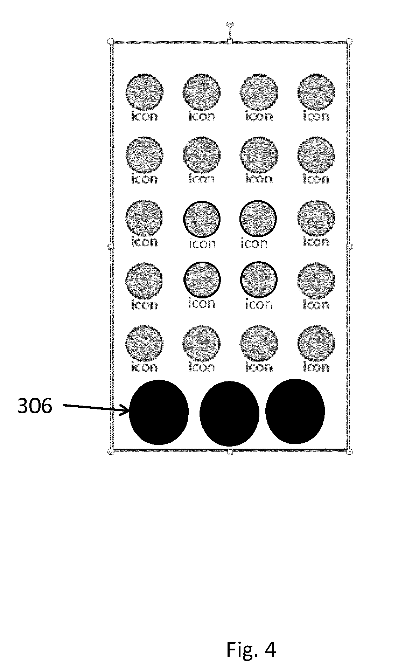

In the example of Fig. 3, the predicted application icons 306 are presented in a central area 308 of the application prediction user interface 230. As shown in Figure 3, the predicted application icons 306 are larger in size than the non-predicted application icons 304. This allows the predicted application icons 306 to be readily distinguishable. In alternate embodiments, the predicted application icons 306 can be presented in any suitable area and in any suitable manner on the user interface 230 that allows the predicted application icons to be easily identified. For example, as is illustrated in Figure 4, the predicted application icons 306 can be presented along a bottom row of the application grid, such as in a favorites bar.

In one embodiment, the prediction icons 306 can be suitably labeled and presented in the form of user selectable actions or functions, as is generally understood. It will be understood that the predictions can be presented on the user interface 230 in any suitable manner that allows a user to make, or not make, a selection. When the user "clicks" on any one of the icons 302, such as a predicted application icon 306, the function or action associated with the selected icon 302 will be activated in a manner as is generally understood and the chose action or function is recorded together with sensor readings.

In one embodiment, the application prediction icons 306 shown in Figure 3 are in the form of a scrollable list, where multiple predictions are presented at any one time. In alternate embodiments, any suitable number of prediction icons 306 can be presented. The prediction user interface 230 of Figures 3 and 4 are merely exemplary, and it will be understood that the prediction user interface 230 can comprise any suitable form adaptable to a particular display 110 of a mobile device 100.

The nearest match(es) determined by the random index system 220 forms the prediction icons 306 that will be presented on the prediction user interface 230. For example, if the detected user action and context information is that of the user traveling on a bus, a bus route application might be predicted since the bus route application has been used before in a similar context. As another example, if the detected user action and corresponding context information is that of a user jogging, the predicted application icons 306 can comprise one or more of a heart rate monitor application and a map application. These applications will be predicted because these applications have been used before in a similar context.

As a further example, the detected user action and context information is that of messaging via a social media application such as Facebook™. In this instance, a social media application of the mobile device 100 is proposed as a relevant application. Here again, the social media application is predicted because the system 200 has previously learned this action in association with the same or similar context information.

The intent interceptor 240 is configured to detect the activation of an application on the mobile device 100 and use this information to refine future predictions. The aspects of the disclosed embodiments enable a user to select one or more of the predicted application icons 306 presented on the prediction user interface 230. Alternatively, the user of the mobile device 100 can activate an application that is not presented on the prediction user interface 230.

The activation of an application, whether it is one of the application predicted by the random index system 200 or another application, is detected by the intent interceptor 240. Data corresponding to the detected application selection or action taken is then sent to the event generator 210, where the detected application selection data is stored in association with the current set of words. The current set of words and the associated action can be stored in the event database 260, for example, to become part of the previously generated sets of words. This allows the prediction system 200 to "learn" from the current context information, and selection of a predicted application icon 306, in order to provide more closely associated or relevant applications in the future.

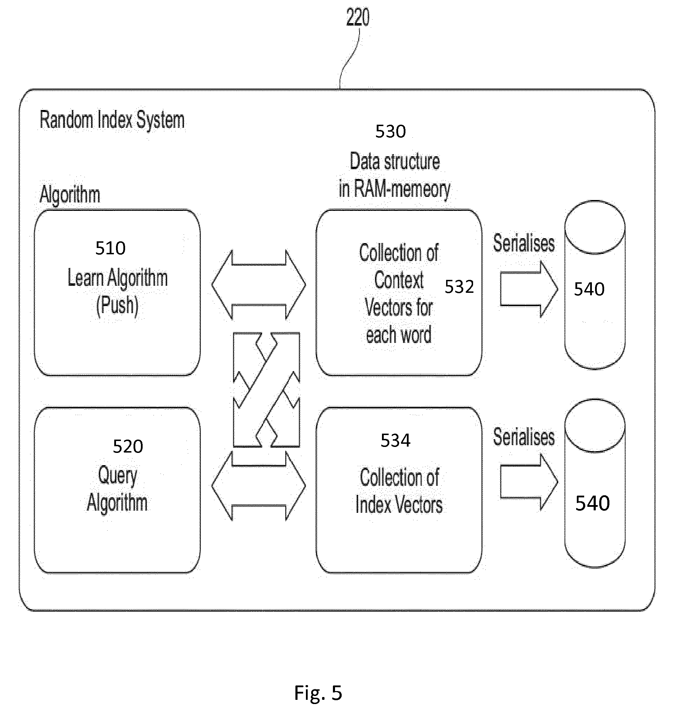

Figure 5 illustrates a high level architecture of the random index system 220 of Figure 2. In this example, the functioning of the random index system 220 is divided into two parts, a learning part 510 and a query part 520. The learning part 510 learns from new chains of events or occurrences. For example, the learning part 510 determines the current context information and user action. This data is then stored in the data structure 530. The data structure 530 includes the collection 532 of context vectors for each word and the collection 534 of index vectors. In one embodiment, the data stored in the data structure 530 can be serialized to the file or storage system 540 of the mobile device 100. The collection 534 of index vectors is also written to the file system 540 for future use in encoding the words into the sparse representations.

In building the sparse vectors, which is the union of index vectors, the collection 534 of index vectors uses the same representations for the same events that have happened in the past. In this manner, the storage capabilities of the mobile device 100 are not exceeded. Thus, while each word has a sparse representation or index vector that is unique and random, the same sparse representation is always used for the same word in future occurrences.

The query portion 520 of the random index system uses the collection 532 of context vectors for each word and the collection 534 of index vectors. A bag or set of words represents the current context information and is encoded into the sparse representation by combining the index vector representations of the individual words found in the collection 534 of index vectors. The sparse representation or context vector is then compared to each vector in the collection 532 of context vectors, using for example a cosine similarity measure.

Each word has a row in the random index and the vector for the row is the sparse representation of the causations that occurred in the past. Causations in the sparse vector of that row predict the word of that row. For example, the word may be url://http://www.huawei.com and the context information that would lead to the prediction of this URL might be found from the current context representation as being similar to that row in the random index.

The aspects of the disclosed embodiments provide a measuring system where causation similarities are measured (what followed what) from what occurred in the past, and predictions are made from it. The more parameters in the context information currently occurring matches, the more likely is that the prediction will be a good one. The prediction system 200 of the disclosed embodiments predicts applications that have been used or selected in the past because the system knows what has occurred in the past. The system of the disclosed embodiments is configured to work locally inside the mobile device 100, and the predictions are only based on what the mobile device 100 has learned from the user of the mobile device by encoding the causations, multiple co-occurring contexts (represented by sparse representations of bag of words) into a high dimensional space.

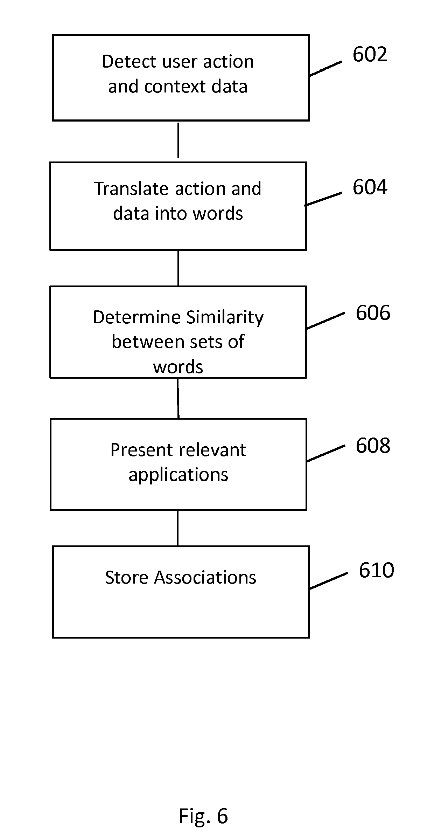

Figure 6 is a flow chart illustrating one embodiment of a process incorporating aspects of the disclosed embodiments, which can be performed by an apparatus (e.g. by a processor of the apparatus). In this example, a user action and context data related to the mobile device 100 is detected 602. The user action and detected parameters are translated 604 into a set of words, also referred to as a bag of words. A semantic similarity is calculated 606 between the set of words and at least one previously generated set of words. One or more relevant applications are predicted and presented 608 based on similar sets of words. The one or more predicted actions can be presented 608 on the display 110 of the mobile device 100.

In one embodiment, selection of a relevant application, or other application will create an action. The created action is stored 610 together with the current set of words and stored in the event database. This allows the system to learn from prior actions and alter future predictions.

The aspects of the disclosed embodiments provide for a prediction of a relevant application on a mobile device. The user activity and other parameters related to the user activity are captured and translated into associable concepts, such as words. The words are formed into a bag of words, or data sets. The random index system of the disclosed embodiments makes associations between the current contextual information (the bag of words) and events that happened in the past, or previously generated data sets. By comparing current contextual information to previously generated data sets similarities can be identified and a relevant application predicted. The user activity and parameters are described in machine readable language and associations are identified. The words are translated back to actual actions in the form of predictions that are executable by the system. When the user acts on one of the predictions, the choice creates an action. This action is learned by the random index system of the disclosed embodiments and associated with a bag of words that is stored. Thus, when a user acts on a prediction by selecting an application, this causes a change in the random index matrix, which will alter the future predictions.

Thus, while there have been shown, described and pointed out, fundamental novel features of the invention as applied to the exemplary embodiments thereof, it will be understood that various omissions and substitutions and changes in the form and details of devices and methods illustrated, and in their operation, may be made by those skilled in the art without departing from the spirit and scope of the invention. Moreover, it is expressly intended that all combinations of those elements, which perform substantially the same function in substantially the same way to achieve the same results, are within the scope of the invention. Moreover, it should be recognized that structures and/or elements shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. An apparatus (100; 200) for arranging and presenting application icons (302) in an application grid (230) on a user interface (108) of the apparatus (100; 200), the apparatus (100; 200) comprising:
a processor (102);
wherein the processor (102) is configured to:
detect a user action and at least one context parameter associated with the apparatus (100; 200)
determine one or more applications relevant to a combination of the detected user action and the at least one context parameter; and
arrange the application grid (230) to present application icons (302) corresponding to the determined one or more applications relevant to the detected user action.

2. The apparatus of claim 1, wherein the processor (102) is configured to:
present the application icons in a predetermined area on the user interface (108).

3. The apparatus of claims 1 or 2, wherein the processor (102) is configured to highlight the application icons (302) corresponding to the determined one or more applications relevant to the detected user action relative to other application icons (302) in the application grid (230).

4. The apparatus of any one of claims 1-3, wherein the processor (102) is configured to detect at least one or more of a time of the user action and a location of the user action and use the one or more of the time of the user action and the location of the user action to determine the one or more applications relevant to the detected user action.

5. The apparatus of any one of claims 1-4, wherein the processor (102) is configured to re-arrange the application grid (230) of the user interface (108) to present the application icons (302) corresponding to the determined one or more applications relevant to the detected user action in a pre-determined region of the user interface (108).

6. The apparatus of any one of claims 1-5, wherein the processor (102) is configured to re-arrange the application grid (230) of the user interface (108) to present the application icons (320) corresponding to the determined one or more applications relevant to the detected user action in a pre-determined order on the user interface (108).

7. The apparatus of any one of claims 1-6, wherein the processor (102) is configured to use a random index predictor to determine the one or more applications relevant to the detected user action.

8. The apparatus of any one of claims 1-7, wherein the processor (102) is configured to:
identify a current arrangement of application icons 302 in the application grid (230) of the user interface (108); and
reconfigure the current arrangement of application icons (302) in the application grid (230) to present application icons corresponding to the one or more applications relevant to the detected user action and at least one context parameter.

9. The apparatus of any one of claims 1-8, wherein the processor (102) is configured to re-configure a pre-determined area of the user interface (108) to include application icons corresponding to the determined one or more relevant applications.

10. The apparatus of any one of claims 1-9, wherein the processor (102) is configured to arrange the application icons (302) corresponding to the determined one or more relevant applications in a central region (308) of the user interface (108).

11. The apparatus of any one of claims 1-10, comprising a switch (116) for switching the user interface (108) between a conventional application grid mode and a self-arranging application grid mode, wherein the self-arranging application grid mode is configured to automatically arrange the application grid of the user interface (108) to present the application icons corresponding to the determined one or more relevant applications on the user interface (108).

12. The apparatus of any one of claims 1-11, wherein the processor (102) is configured to:
create a user profile comprising one or more detected user actions and one or more corresponding application grid arrangements;
compare the detected user action and the at least one context parameter to the user profile; and
re-arrange the application grid to present an application grid arrangement from the user profile corresponding to the detected user action.

13. The apparatus of claims 12, wherein the processor (102) is configured to:
detect a selection of an application; and
update the user profile to associate the detected selection of the application with the detected user action and the at least one context parameter.

14. A method for predicting applications to be presented in an application grid of a user interface of an apparatus, the method comprising;
detecting (602) a user action and at least one context parameter associated with the apparatus
determining (606) one or more applications relevant to a combination of the detected user action and the at least one context parameter; and
arranging (608) the application grid to present application icons corresponding to the determined one or more applications relevant to the detected user action and at least one context parameter.

15. A computer program product including non-transitory computer program instructions that when executed by a processor cause the processor to perform the method according to claim 14.
